(19)

Europäisches Patentamt
European Patent Office
Office européen des brevets

(11) **EP 1 953 286 A1**

(12) **EUROPEAN PATENT APPLICATION**

(43) Date of publication:
06.08.2008 Bulletin 2008/32

(21) Application number: 08250350.9

(22) Date of filing: **29.01.2008**

(51) Int Cl.:
*D04H 13/00* (2006.01)    *B32B 5/26* (2006.01)
*A41D 13/11* (2006.01)    *B01D 39/16* (2006.01)
*B01D 39/20* (2006.01)    *A41D 31/00* (2006.01)

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **01.02.2007 JP 2007022753**
**01.02.2007 JP 2007022760**

(71) Applicant: **Nisshinbo Industries, Inc.**
**Chuo-ku,**
**Tokyo 103-8650 (JP)**

(72) Inventors:
• **Imashiro, Yasuo, c/o R&D Center**
**Chiba-shi, Chiba-ken 267-0056 (JP)**
• **Sasaki, Naokazu, c/o R&D Center**
**Chiba-shi, Chiba-ken 267-0056 (JP)**
• **Ogushi, Yukiko, c/o R&D Center**
**Chiba-shi, Chiba-ken 267-0056 (JP)**
• **Iizuka, Mami, c/o R&D Center**
**Chiba-shi, Chiba-ken 267-0056 (JP)**

(74) Representative: **Stuart, Ian Alexander et al**
**Mewburn Ellis LLP**
**York House**
**23 Kingsway**
**London WC2B 6HP (GB)**

(54) **Fabric and mask**

(57)    A fabric which desirably has antimicrobial and/or dustproof properties includes a textile material layer which is composed of microfibers with an average fiber diameter of from 1 to 100 μm and contains an inorganic porous substance, and a nanofiber nonwoven fabric layer which is laminated on the textile material layer and has an average fiber diameter of at least 1 nm but less than 1,000 nm. Hygienic products such as masks obtained using the fabric efficiently block microbes such as viruses, and inactivate or destroy the captured microbes.

EP 1 953 286 A1

**Description**

The present invention relates to a fabric which includes a nanofiber nonwoven fabric. The invention also relates to a mask in which such a fabric is used. The fabric desirably has antimicrobial and/or dustproof properties.

Prior Art

Textile materials having antimicrobial properties and textile materials capable of effectively separating off very small particles such as viruses have recently been developed.

For example, JP-A 2003-166155 discloses a nonwoven fabric which is composed of synthetic fibers such as polyester fibers, and coated with a specific amount of antifungal agent.

JP-A 2005-270965 discloses a filter having a filtration layer which is made of fibers with an average diameter of 1 to 150 nm and in which fibers with a diameter of from 1 to 150 nm account for at least 60% of the weight.

JP-A 2005-527344 discloses a filter composed of a supporting layer made of a nonwoven fabric or the like, and a filter medium made of fibrillated nanofibers.

The nonwoven fabric of JP-A 2003-166155 has good antimicrobial properties and antifungal properties, but because it lacks a sufficient ability to trap bacteria and viruses, these are able to pass through the fabric. To increase the ability to trap bacteria and viruses, multiple layers of the nonwoven fabric must be built up.

The filter of JP-A 2005-270965 is capable of very effectively separating off small viruses about 80 nm or more in size. However, the nanofibers used in this filter are produced by a special technique that entails melt-spinning polymer alloy fibers having a sea-island structure from polymer alloy chips, then dissolving the sea component. Hence, the production method is complicated, and the filter itself lacks general utility. Moreover, the filter does not have a sufficient inactivating effect on the viruses, etc. that have been separated off.

The filter medium in JP-A 2005-527344 also has an excellent ability to collect small particles several hundreds of nanometers in size. However, because fibrillated nanofibers are essential to this filter medium, fibrillation treatment is required in the nanofiber production operations, making the production process complex.

Masks for preventing the inhalation of very small harmful substances suspended in the air, such as bacteria, viruses and fungi which cause, colds, influenza and other ailments, as well as pollen, household dust, outside dust, and suspended particulate matter (SPM) in exhaust gases and emissions, and protective apparel for preventing infection from contact with various types of bacteria, viruses and fungi present in blood and other bodily fluids are used in daily life and at various places such as medical centers.

Nonwoven fabrics are commonly employed as the material making up such masks and protective apparel.

For example JP-A 2005-124777 discloses an infection-preventing mask made of a laminate of a plurality of nonwoven fabrics, wherein the nonwoven fabric of the surface layer is a polyolefin or polyester nonwoven fabric of a specific basis weight which bears on the surface thereof a titanium dioxide-apatite photocatalyst.

JP-A 2005-7072 discloses a multilayer mask built up in layers of, from the outside, coarse-textured nonwoven fabric, fine-textured nonwoven fabric, synthetic fiber fabric, and cotton fabric.

JP-Y 3068551 discloses an infection-preventing apparel made of a fabric material having a three-layer construction in which the following are integrally united: an intermediate nonwoven fabric layer that is composed of a polypropylene resin nonwoven fabric of ultrafine fibers obtained by a melt blowing method and, situated on both the face and back sides thereof, outside reinforcing nonwoven fabric layers that are composed of a polypropylene resin nonwoven fabric of continuous filaments obtained by a spunbonding process. In addition, JP-A 2003-166155 discloses a nonwoven fabric which is composed of synthetic fibers such as polyester fibers and is coated with a specific amount of an antifungal agent. This nonwoven fabric is described as being suitable for a variety of applications, including hygiene products.

Although the mask of JP-A 2005-124777 has a good filtration ability and photocatalytic activity, because it is composed of four or more layers of nonwoven fabric so as to increase the ability to capture viruses and dust, airflow through the mask is poor and it tends to become hot and uncomfortable with prolonged use. Moreover, in the absence of sufficient light energy, the photocatalyst does not exhibit sufficient bactericidal effects, leaving open the possibility of viral ingress into the body.

The mask of JP-A 2005-7072, owing to the layered structure composed of a coarse-textured nonwoven fabric and a statically charged synthetic fiber fabric, has an increased virus filtration efficiency. However, because it is unable to strongly adsorb and inactivate viruses, there is a possibility of viruses passing through the mask.

In the infection-preventing apparel of JP-Y 3068551, the polypropylene nonwoven fabric layer is made thick in order to efficiently prevent the invasion of bacteria and viruses, but the apparel has a poor breathability and tends to become hot and uncomfortable. Moreover, in this case as well, viruses cannot be adsorbed and inactivated.

The nonwoven fabric of JP-A 2003-166155, even when employed in masks and infection-preventing apparel, lacks a sufficient ability to trap and adsorb viruses and the like. Hence, there remains a possibility that viruses will pass through. Moreover, making the nonwoven fabric layer thicker in order to increase the virus filtration ability leads to problems such reduced comfort during use due to stuffiness or the like.

SUMMARY OF THE INVENTION

A preferred embodiment of the invention may provide an antimicrobial, dustproof fabric which is capable of efficiently blocking viruses, bacteria, dust and the like, and can inactivate or destroy captured viruses and bacteria. In another aspect, an embodiment may provide a mask equipped with such a fabric.

We have discovered that a preferred fabric obtained by laminating a textile material layer that is made of microfibers and contains an inorganic porous material together with a nanofiber nonwoven fabric layer has an excellent ability to filter and adsorb bacteria, viruses, dust and the like and is able to efficiently destroy or inactivate the adsorbed bacteria and viruses. We have also found that such a fabric, although permeable to steam under atmospheric pressure, does not allow liquids such as water to pass through, and moreover is suitable as a fabric for use in masks.

Accordingly, in a first aspect, the invention provides a fabric which includes a textile material layer composed of microfibers with an average fiber diameter of from 1 to 100 $\mu$m and containing an inorganic porous substance, and a nanofiber nonwoven fabric layer which is laminated onto the textile material layer and has an average fiber diameter of at least 1 nm but less than 1,000 nm. The fabric is desirably antimicrobial and/or dustproof.

The nanofiber nonwoven fabric typically includes nanofibers made of polylactic acid and/or polyamide, and has a thickness of preferably at least 1 $\mu$m. It is desirable for the nanofiber nonwoven fabric to have a minimum pore size of 0.1 $\mu$m or less and a maximum pore size of more than 0.1 $\mu$m but not more than 1 $\mu$m.

The inorganic porous substance in the textile material layer may be one or more selected from the group consisting of zeolite, hydrotalcite, hydroxyapatite, activated carbon, diatomaceous earth, silica gel and clay minerals, and may support one or more metal selected from the group consisting of copper, silver, zinc, iron, lead, nickel, cobalt, palladium and platinum. A zeolite which supports one or more metal selected from among copper, silver and zinc is preferred.

The nanofiber nonwoven fabric layer may be formed directly on the textile material layer by electrostatic spinning.

In a second aspect, the invention provides a mask having a facepiece for covering a wearer's nose and mouth, and a securing member which is disposed on the facepiece and secures the mask to the wearer. The facepiece includes the fabric according to the above-described first aspect of the invention.

The textile material layer composed of microfibers in the fabric of the facepiece is typically a microfiber nonwoven or woven fabric layer.

It is preferable for the nanofiber nonwoven fabric to be disposed on a nose and mouth side of the facepiece, and for the microfiber nonwoven or woven fabric to be disposed on a side of the facepiece opposite the nose and mouth side.

In one embodiment of the second aspect of the invention, the facepiece has a three-layer construction composed of the nanofiber nonwoven fabric layer, the microfiber nonwoven or woven fabric layer which is laminated on a first side of the nanofiber nonwoven fabric layer, and an inorganic porous substance-lacking microfiber nonwoven or woven fabric layer which is laminated on a second side of the nanofiber nonwoven fabric layer.

In another embodiment of the second aspect of the invention, the facepiece has a three-layer construction composed of the nanofiber nonwoven fabric layer, and a layer of the microfiber nonwoven or woven fabric laminated on each of two sides of the nanofiber nonwoven fabric layer.

In yet another embodiment; the facepiece includes a pair of laminated bodies, each of which is composed of the microfiber nonwoven or woven fabric layer and the nanofiber nonwoven fabric layer laminated thereon. In this embodiment, it is preferable for the pair of laminated bodies to be laminated together so that the respective nanofiber nonwoven fabric layers are both on the inside.

The fabric of the invention provides a number of effects. It desirably has antimicrobial and dustproof properties. The textile material layer, which is made of microfibrils and contains an inorganic porous material, traps and adsorbs bacteria and viruses, thus destroying and inactivating bacteria and viruses. Moreover, the nanofiber nonwoven fabric layer has both a high-level blocking effect against such viruses and the like, and also filters and removes such microbes.

In addition, because the nanofiber nonwoven fabric layer has a high water repellence, the antimicrobial, dustproof fabric of the invention is permeable to air and steam, but does not allow liquids such as organic solvents, disinfecting alcohols, blood and other bodily fluids to penetrate.

Therefore, by using the inventive fabric as a fabric for hygienic products such as medical apparel, it is possible not only to remove harmful particles such as dust, pollen and fungal spores, but also to prevent the wearer from contracting various types of infections caused by viruses suspended in the air or various bacteria and viruses present in blood and other bodily fluids.

In particular, by using the inventive fabric in a mask, small harmful particles such as outside dust, household dust, SPM and pollen can be removed, in addition to which the wearer can be protected from contracting infections caused by viruses suspended in the air or various bacteria, viruses and fungi present in blood and other bodily fluids.

Furthermore, the fabric of the invention, by employing a thin nanofiber nonwoven fabric layer, can be made more lightweight than conventional fabrics.

In addition, because the inventive fabric has a good air permeability, it does not feel unpleasantly hot even during prolonged use, and is comfortable to put on and wear.

DETAILED DESCRIPTION OF THE INVENTION

The invention is described more fully below.

A preferred antimicrobial, dustproof fabric embodying the invention includes a textile material layer composed of microfibers having an average fiber diameter of from 1 to 100 μm and containing an inorganic porous substance, and a nanofiber nonwoven fabric layer which is laminated on the textile material layer and has an average fiber diameter of at least 1 nm but less than 1,000 nm.

The textile material in the present invention encompasses all structures made of fibers, such as nonwoven fabric, woven fabric, felt, knit fabric, paper and sheet-like materials. When the inventive fabric is used in a mask, the textile material is preferably a microfiber nonwoven or woven fabric.

Woven fabrics and nonwoven fabrics used in the present invention may be in any form, provided they are made of fibers having the above-indicated average fiber diameter. Examples of suitable woven fabrics include various types of woven fabrics obtained by using a known technique for weaving together warp yarns and filling yarns. Examples of suitable nonwoven fabrics include various nonwoven fabrics obtained by known techniques such as spunbonding, thermal bonding, spunlacing and melt blowing.

The fibers which make up the textile material are not subject to any particular limitation, provided they are fibers having an average fiber diameter of from 1 to 100 μm, and preferably from 1 to 60 μm. For example, natural fibers, synthetic fibers, and mixed fibers thereof may be used.

Illustrative examples of natural fibers include vegetable fibers such as cotton and linen, and animal fibers such as wool and silk. Cotton is preferred.

Illustrative examples of synthetic fibers include polyamide, polyester, polyolefin and polyacrylonitrile fibers. Polyolefin fibers and polyester fibers are preferred. Of these, the use of polypropylene fibers, polyethylene fibers, polyethylene terephthalate fibers and polybutylene terephthalate fibers is especially preferred.

The textile material layer has a thickness which, while not subject to any particular limitation, is preferably from about 0.01 to about 5 mm, and more preferably from about 0.01 to about 3 mm.

If the textile material is a nonwoven fabric or a woven fabric, the basis weight, while not subject to any particular limitation, is preferably from about 2 to about 100 $g/m^2$, and more preferably from about 10 to about 70 $g/m^2$.

Illustrative examples of the inorganic porous substance include zeolite, hydrotalcite, hydroxyapatite, activated carbon, diatomaceous earth, silica gel, clay minerals, porous clay, sepiolite, allophane, imgreite, activated clay, perlite, porous glass and porous alumina materials.

Of these, from the standpoint of good heat resistance, safety and stability, the use of zeolite, hydrotalcite, hydroxyapatite, activated carbon, diatomaceous earth, silica gel or clay minerals is preferred. Zeolite is especially preferred because it has the broadest range of use.

The amount of inorganic porous substance included in the textile material is not subject to any particular limitation. For example, the content of the inorganic porous substance may of from about 0.1 to about 60 wt%.

A metal may be supported on the inorganic porous substance.

Illustrative examples of the metal include copper, silver, zinc, iron, lead, nickel, cobalt, palladium and platinum. These may be used singly or as combinations of two or more thereof.

Of the above, to enhance the antimicrobial and antiviral properties of the fabric, it is preferable to use copper, silver or zinc. Copper and silver are more preferred. With the use of a copper or silver-supporting inorganic porous substance, the influenza virus-destroying effect and the deodorizing effect owing to the adsorption and decomposition of hydrogen sulfide and ammonia can be increased.

In the fabric of the invention, nonwoven fabric which supports copper zeolite, silver zeolite or zinc zeolite is especially preferred.

Methods that may be used for supporting a metal on the inorganic porous substance include, for example, a method which involves preparing an aqueous solution of a salt of the metal to be used and dipping the inorganic porous substance in the solution, and a method which involves preparing an emulsion containing the metal to be used, and coating the inorganic porous substance with the emulsion. The dipping method is especially preferred because it enables the metal to be supported without waste over the entire inorganic porous substance.

The metal concentration within the aqueous metal salt solution used in the dipping method, while not subject to any particular limitation, is preferably from 1.0 to 100 mmol/L.

Examples of techniques for producing a textile material containing an inorganic porous substance include: (1) a method in which a liquid composition obtained by dispersing particles of an inorganic porous substance in a resin solution or a resin emulsion is coated onto or impregnated into a textile material, then is dried so as to bond the particles of the inorganic porous substance onto the surface of the fibers making up the textile material; and (2) a method in which a starting solution of the inorganic porous substance is impregnated into a textile material, following which particles of the inorganic porous substance are made to deposit onto the surface and interior of the fibers making up the textile material.

In cases where an inorganic porous substance which supports a metal is included in the textile material, a metal-supporting inorganic porous substance is used as the inorganic porous substance to be bonded. The metal may be supported at the time that particles of the inorganic porous substance are deposited on fibers of the textile material, or may be supported on particles of the inorganic porous substance that have already been bonded to or deposited on the surface and interior of the fibers.

In the fabric of the invention, the resin making up the nanofiber nonwoven fabric is exemplified by polylactic acid, polyamide, polyurethane, polyacrylonitrile, polystyrene, polyimide, polyethylene, polypropylene, polyester, polyvinyl alcohol, polyethylene glycol, polyoxyethylene, polyvinylpyrrolidone, polyvinyl acetate, starch and carboxymethylcellulose. Of these, polyamide and polylactic acid, which has an excellent degradability, are preferred. The use of polylactic acid alone, polyamide alone, or a combination of polylactic acid and polyamide, as the resin for the nanofiber nonwoven fabric is suitable.

Polylactic acid is exemplified by polylactides that are polymers or copolymers of hydroxy acids such as lactic acid, malic acid and glycolic acid. Specific examples include polylactic acid, poly($\alpha$-malic acid), polyglycolic acid and glycolic acid/lactic acid copolymers. It is especially preferable to use a hydroxycarboxylic acid-based aliphatic polyester, a typical example of which is polylactic acid.

Examples of polyamides include those obtained by polymerizing or polycondensing an aminocarboxylic acid, lactam or diamine with a dicarboxylic acid. Illustrative examples include nylon 6, nylon 4.6, nylon 6.6, nylon 6.10, nylon 6.12, nylon 11.6, nylon 11 and nylon 12.

In the present invention, the fibers making up the nanofiber nonwoven fabric have an average fiber diameter of at least 1 nm but less than 1,000 nm, preferably between 10 and 800 nm, and more preferably between 50 to 700 nm. At an average fiber diameter of 1,000 nm or more, the ability to trap contaminants (e.g., bacteria, viruses, fungi, dust) will decrease.

The nanofiber nonwoven fabric has a thickness of preferably at least 1 $\mu$m. At a thickness below 1 $\mu$m, the handleability and processability may decline. On the other hand, if the fabric is too thick, such effects as the lighter weight and greater comfort associated with the use of nanofiber nonwoven fabric will be lost. Hence, the upper limit in the thickness is preferably about 200 $\mu$m, and more preferably about 150 $\mu$m. A thickness in a range of between 10 and 100 $\mu$m is preferred.

It is preferable for the nanofiber nonwoven fabric to have a minimum pore size of 0.1 $\mu$m or less and a maximum pore size of more than 0.1 $\mu$m but not more than 1 $\mu$m. At a maximum pore size of more than 1 $\mu$m or a minimum pore size of more than 0.1 $\mu$m, the contaminant (e.g., viruses, bacteria, dust) filtration efficiency may decline.

To further increase the contaminant filtration efficiency, the maximum pore diameter is preferably more than 0.1 $\mu$m but not more than 0.9 $\mu$m, and more preferably from 0.3 to 0.8 $\mu$m. Also, taking into account the need to ensure sufficient air-permeability of the fabric, the minimum pore size is preferably from 0.03 to 0.1 $\mu$m, and more preferably from 0.03 to 0.08 $\mu$m.

The inventive fabric described above has the ability to filter at least 90%, preferably at least 95%, and more preferably at least 98%, of 0.06 $\mu$m sodium chloride particles.

The nanofiber nonwoven fabric in the fabric of the invention has a high water repellency owing to the presence of very small surface irregularities. As a result, in the antimicrobial, dustproof fabric of the invention, the nanofiber nonwoven fabric layer has the effect of not allowing penetration by contaminants (organic solvents, disinfecting alcohols, blood, bodily fluids, pathogens and other microbes).

The nanofiber nonwoven fabric may be produced by, for example, electrostatic spinning, spunbonding, melt blowing or flash spinning. Of these, electrostatic spinning is preferred because heat influence is minimal when the nanofiber layer is laminated directly onto the textile material layer.

Electrostatic spinning is a process in which a statically charged resin solution is spun into filaments within an electrical field while at the same time the resin solution is disrupted by the repulsive forces between the electrical charges, thereby forming an ultrafine fibrous material made of the resin.

The apparatus used to carry out electrostatic spinning is basically composed of a first electrode which, in addition to serving as a nozzle for discharging the resin solution, applies to the resin solution an elevated voltage of from several thousands to several tens of thousands of volts, and a second electrode which is opposed to the first electrode. The resin solution that has been discharged or shaken from the first electrode forms within the electrical field between the two opposing electrodes a high-speed jet which then meanders and expands, creating nanofibers. The nanofibers collect on the surface of the second electrode, thereby giving a nanofiber nonwoven fabric.

The solvent used in the resin solution will vary depending on the particular resin used and thus cannot be strictly specified. Illustrative examples of the solvent include water, acetone, methanol, ethanol, propanol, isopropanol, toluene, benzene, cyclohexane, cyclohexanone, tetrahydrofuran, dimethylsulfoxide, 1,4-dioxane, carbon tetrachloride, methylene chloride, chloroform, pyridine, trichloroethane, N,N-dimethylformamide, N,N-dimethylacetamide, N-methyl-2-pyrrolidone, ethylene carbonate, diethyl carbonate, propylene carbonate, acetonitrile, formic acid, lactic acid and acetic acid.

The fibers which make up the nanofiber nonwoven fabric may be fibers composed of a single resin or multicomponent fibers composed of two or more different resins. Examples of suitable multicomponent fiber configurations include side-by-side multicomponent fibers, core-in-sheath multicomponent fibers, and multicomponent hollow fibers.

The fibers have a single-filament cross-sectional shape which may be, for example, circular, triangular, flattened, multilobal or porous. The cross-sectional shape may be suitably selected from among these according to such considerations as the intended use.

Examples of methods for laminating the inorganic porous substance-containing textile material layer containing an inorganic porous substance and the nanofiber nonwoven fabric layer include: (1) a method in which the inorganic porous substance-containing textile material layer and the nanofiber nonwoven fabric layer are separately manufactured, then laminated together; and (2) a method in which the nanofiber layer is directly laminated onto the inorganic porous substance-containing textile material layer by a suitable process such as electrostatic spinning. Either approach may be used in the present invention.

In cases where the nanofiber nonwoven fabric layer has a thickness of 40 μm or less, because the thinness of the layer makes it difficult to handle, a method in which the nanofiber layer is laminated directly onto the inorganic porous substance-containing textile material layer is preferred. Moreover, there are cases in which forming the nanofiber nonwoven fabric directly on the textile material by an electrostatic spinning process may increase the areas of contact between the nanofibers and the microfibers, thereby resulting in the contaminants being more efficiently filtered and also more efficiently destroyed or inactivated.

When laminating together the textile material layer and the nanofiber nonwoven fabric layer, these layers may be simply placed on top of each other, although it is possible to instead entangle and unite the layers by needlepunching or to fuse the layers together by heat treatment.

Although it suffices for the fabric of the invention to have at least one inorganic porous substance-containing textile material layer and at least one nanofiber nonwoven fabric layer, the inventive fabric may have a plurality of either the textile material layer or the nanofiber nonwoven fabric layer or both. In such a case, the layers may be laminated in any order, although it is preferable in a three-layer construction for the layers to be arranged as follows: textile material layer/nanofiber nonwoven fabric layer/textile material layer.

When the inventive fabric has a four-layer construction, an arrangement composed of two textile material layers/nanofiber nonwoven fabric layer/textile material layer is preferred.

Alternatively, it is also possible to laminate together two units, each of which is itself a laminate of the textile material and the nanofiber nonwoven fabric. In such a case, it is preferable for the two laminates to be united in such a way that the nanofiber nonwoven fabric layers are both on the inside, thereby forming the following four-layer construction: textile material layer/nanofiber nonwoven fabric layer/nanofiber nonwoven fabric layer/textile material layer.

Moreover, the textile material layer and the nanofiber nonwoven fabric layer may be composed of a blended nonwoven fabric of nanofibers and inorganic porous substance-containing microfibers. In such a case, the respective layers are constructed such that the average fiber diameter in the textile material layer is from 1 to 100 μm and the average fiber diameter in the nanofiber nonwoven fabric layer is at least 1 nm but less than 1,000 nm.

In the fabric of the invention, it is possible for the inorganic porous substance to be supported not only by the textile material layer, but also by the nanofiber nonwoven fabric layer.

In using the above-described fabric of the invention, embodiments in which the inorganic porous substance-containing textile material is positioned on the side of the contaminants (e.g., bacteria, viruses, fungal spores, dust) are preferred. With use in such embodiments, contaminant-bearing air initially comes into contact with the inorganic porous substance-containing textile material. As the air passes through the textile material, the contaminants are securely trapped and adsorbed, following which any remaining contaminants are caught by the nanofiber nonwoven fabric, making it possible to efficiently prevent the contaminants from scattering.

In the above embodiments of the inventive fabric having a three-layer or four-layer construction, because a layer of the inorganic porous substance-containing textile material is positioned on both sides of the fabric construction, the fabric may be used without concern over which side is the front and which is the back. Moreover, because the fabric is capable of filtering contaminants and preventing the scattering of contaminants, during use of the inventive fabric, even should a contaminant arise on a side where initially no contaminant was present or infiltrate from another route that does not pass through the inventive fabric, the fabric will exhibit a good contaminant dispersion preventing effect and good spread of infection preventing and prophylactic effects.

The fabric of the invention may be rendered into a finished product by itself, or may be rendered into a finished product in combination with, for example, nonwoven fabric made from another type of fiber, woven fabric, knit fabric, resin film, resin sheet or felt.

When used in a finished product that comes into direct contact with the skin (mask, gloves, hat), it is preferable to use in the inner layer (skin side) a woven or nonwoven fabric layer made of natural fibers, polypropylene fibers, polyester fibers or the like which do not readily generate fuzz.

The above-described preferred fabric embodying the invention has both the effect of trapping and adsorbing, and thus destroying or inactivating, bacteria, viruses and the like with the inorganic porous substance-containing textile material layer composed of microfibers, and also has a high blocking effect against such viruses and the like with the nanofiber nonwoven fabric layer.

Therefore, the inventive fabric can be used in various types of hygienic products, including articles of clothing, gloves, masks, hats and bandages for emergency personnel engaged in rescue work, law enforcement personnel, community members in various disaster preparedness organizations, workers at special work sites, cleanroom workers and medical workers. The inventive fabric can also be used in various types of work, such as the removal of contaminants from nuclear facilities where radioactive contaminants are present, asbestos removal from ordinary buildings and other structures, and the spraying of agricultural chemicals.

The mask according to the invention has a facepiece for covering a wearer's nose and mouth, and a securing member, disposed on the facepiece, for securing the mask to the wearer. The facepiece includes the above-described, preferably antimicrobial and dustproof, fabric.

To ensure good air permeability, it is desirable for the textile material layer composed of microfibers in the antimicrobial, dustproof fabric to be a microfiber nonwoven or woven fabric.

Regarding the use in masks of a facepiece which includes an inorganic porous substance-containing textile material layer (nonwoven or woven fabric layer) composed of microfibers and a nanofiber nonwoven fabric layer, embodiments in which the inorganic porous substance-containing textile material layer (nonwoven or woven fabric layer) composed of microfibers is positioned on the side of the contaminants (e.g., bacteria, viruses, fungi, outside dust, household dust, SPM, pollen) are preferred. In such embodiments, contaminant-bearing outside air or intake air comes into contact with and passes through the inorganic porous substance-containing textile material layer (nonwoven or woven fabric layer) made of microfibers, at which time the contaminants are securely adsorbed and trapped by the inorganic porous substance. Any remaining contaminants are then trapped by the nanofiber nonwoven fabric, enabling the contaminants to be efficiently prevented from scattering. Not only are the bacteria and viruses which have been adsorbed and trapped by the textile material layer (nonwoven or woven fabric layer) made of microfibers destroyed or inactivated, those bacteria and viruses which have been trapped in areas of contact between the nanofiber nonwoven fabric and the textile material layer (nonwoven or woven fabric layer) made of microfibers are also destroyed or inactivated.

For example, in masks for patients who have contracted a bacterial or viral infection, the inorganic porous substance-containing textile material layer (nonwoven or woven fabric layer) made of microfibers is disposed on the side of the nose and mouth. By adopting this arrangement, bacteria and viruses present in the patient's respirator or in secretions released from the mouth as droplets are destroyed inside the mask, thus keeping them from scattering and making it possible to prevent the spread of infection.

Conversely, in masks for preventing infection, the nanofiber nonwoven fabric layer is disposed on the side of the nose and mouth and the inorganic porous substance-containing textile material layer (nonwoven or woven fabric layer) made of microfibers is disposed on the outside thereof. By virtue of this arrangement, outside air bearing bacteria and viruses first passes through the inorganic porous substance-containing textile material layer (nonwoven or woven fabric layer) made of microfibers, where most of the bacteria and viruses are adsorbed and retained by the inorganic porous substance. The bacteria and viruses that manage to pass through the textile material layer are then trapped by the nanofiber nonwoven fabric layer, thus making it possible to prevent infection by the bacteria and viruses.

Here too, because the above-described embodiments of the inventive fabric having a three-layer structure or four-layer structure are capable both of trapping and removing contaminants and also of preventing the contaminants from scattering, even should contaminants arise on the side where no contaminants were initially present or should contaminants enter by another route instead of passing through the fabric of the invention, a good spread of infection-preventing effect and a good prophylactic effect are achieved.

In the mask of the invention, it is possible to use either a facepiece which includes only a laminate of the inorganic porous substance-containing textile material layer (nonwoven or woven fabric layer) made of microfibers and the nanofiber nonwoven fabric layer, or a facepiece which includes this laminate and also another type of nonwoven, woven or knit fabric. For example, a facepiece having at least three layers obtained by laminating an inorganic porous substance-containing textile material layer (nonwoven or woven fabric layer) made of microfibers on one side of a nanofiber nonwoven fabric layer and laminating an inorganic porous substance-lacking textile material layer (nonwoven or woven fabric layer) made of microfibers on the other side of the nanofiber nonwoven fabric layer may be used in the mask.

In addition, because the mask is a product which comes into direct contact with the skin, it is preferable to use on the inner layer (nose and mouth side) a woven or nonwoven fabric layer made of fibers which do not readily generate fuzz, such as natural fibers, polypropylene fibers, polyester fibers, or polyethylene/polypropylene core-sheath fibers. The use of a woven fabric or nonwoven fabric layer composed of such natural materials as rayon fibers or cellulose fibers is more environmentally friendly at the time of disposal and thus preferred.

The mask of the invention, being characterized by the use of a facepiece having an inorganic porous substance-containing textile material layer (nonwoven or woven fabric layer) made of microfibers and a nanofiber nonwoven fabric layer, is not subject to any particular limitation concerning the shape and other aspects of the facepiece and concerning the material, shape and other aspects of the securing member. Various shapes and materials known to the art may be suitably employed. With regard to the mask shape, for example, the mask may be of a folding type, cup type or flat type. Securing members that may be used include a pair of ear loops, bands or the like attached to both sides of the facepiece.

In a half-mask covering at least the nose and mouth of the wearer, the effective surface area is preferably about 100 to 300 $cm^2$.

EXAMPLES

Examples of the invention and Comparative Examples are given below by way of illustration and not by way of limitation. Evaluations in the respective Examples of the invention and Comparative Examples were carried out by the following methods. All parts in the examples are by weight.

(1) Average Fiber Diameter

The fiber diameters were measured at 20 randomly selected placed on a micrograph of the surface of a specimen taken at a magnification of 5,000x with a scanning electron microscope (S-4800I, manufactured by Hitachi High-Technologies Corporation), and the average fiber diameter was obtained by determining the mean value (n = 20) for all the fiber diameters.

(2) Thickness of Nonwoven Fabric

Thickness measurements were taken at five randomly selected places under a measuring force of 1.5 N using a digital thickness gauge (SMD-565, manufactured by Teclock). The nonwoven fabric thickness was obtained by determining the mean value (n = 5) for all the measured thicknesses.

(3) Basis Weight of Nonwoven Fabric

The weight of a specimen was measured, and the weight per square meter was calculated.

(4) Filtration Test

In accordance with the NaCl particle filtration efficiency test method (JICOSH Standard for Dust Masks, Article 6), using NaCl particles as a model for viruses, air was passed through under the conditions indicated below from a specific side of the fabric until the cumulative weight of test particles reached 100 mg, and the initial inhalation resistance was determined. The filtration efficiency was continuously measured with a light-scattering dust meter. During the test, the average filtration efficiency was measured once a minute.

| | |
|---|---|
| Test specimen: | 130 mm diameter (effective surface area, 100 $cm^2$) |
| Measurement apparatus: | AP-9000 (Shibata Scientific Technology Ltd.) (light scattering system AP-632F) |
| Test particles: | NaCl particles (generated by AP-9000; Shibata Scientific Technology) |
| Average size of test particles: | 60 nm to 100 nm |
| Test concentration: | about 28 $mg/m^3$ |
| Test flow rate: | 85 L/min |
| Amount of particles fed: | Test was stopped when the cumulative amount of NaCl particles fed to the test specimen reached 100 mg |

(5) Antimicrobial Performance Test (Cell Count Measurement Method)

The following cell count measurement method described in the "Manual for Evaluating and Testing the Effectiveness of Antimicrobial Deodorizing Products" issued by the Japanese Association for the Functional Evaluation of Textiles (JAFET) was used.

*Staphylococcus aureus* was grown as the test organism in an ordinary bouillon medium to a concentration of 106 to 107 cells/ml, and the resulting culture was used as the test organism suspension. Next, 0.2 ml of this suspension was uniformly inoculated into 0.4 g of the test specimen in a threaded vial and subjected to a standing culture at a temperature of 36 to 38°C for 18 hours. Twenty milliliters of sterile, buffered physiological saline was subsequently added to the vial, which was then shaken strongly by hand 25 to 30 times at an amplitude of 30 cm to disperse live cells from the test specimen in the liquid. Next, a suitable dilution series was created with the sterile, buffered physiological saline, 1 ml of the dilution at each stage was placed in each of two Petri dishes, and about 15 ml of a standard agar medium was also added. Culturing was then carried out at 36 to 38°C for 24 to 48 hours, following which the number of grown colonies was counted and the number of live cells in the test specimen was computed based on the dilution factor. The test was regarded as valid at growth values above 1.5. In addition, the bacteriostatic activity S and the bactericidal activity L were determined using the formulas shown below. A bacteriostatic activity of 2.2 or more was rated as "Good," and a bacteriostatic activity of less than 2.2 was rated as "NG."

$$\texttt{Bacteriostatic activity S = B - C}$$

$$\texttt{Bactericidal activity L = A - C}$$

where

A: Average of common log values for number of live cells in three samples immediately after bringing a standard fabric into contact with test organisms
B: Average of common log values for number of live cells in three samples after culturing a standard fabric for 18 hours
C: Average of common log values for number of live cells in three samples after culturing an antimicrobially treated test specimen for 18 hours

(6) Water Permeability Test

A test specimen having a 2.2 cm diameter was placed on the bottom of a stainless steel permeation cell having a diameter of 3.0 cm, and 20 ml of pure water was placed in the cell under a pressure of 0 MPa. The amount of water that had passed through the test specimen after 1 minute had elapsed was determined, and this result was converted to the water permeability per unit time and unit area ($L/m^2 \cdot min$). Measurements were carried out in a chamber at room temperature (23°C).

(7) Minimum Pore Size/Maximum Pore Size Test

The pore sizes were measured and evaluated as follows, based on the bubble point method (ASTM F316, JIS K3832).
Using a Perm Porometer (manufactured by PMI; model CFP-1200A), dry air was passed through a test specimen over a measurement diameter of 25 mm and the gas pressure was increased in stages, during which time the air flow rate was observed. This yielded a dry flow rate curve.
Next, a test specimen was pretreated by dipping it in Galwick solution (manufactured by PMI) having a surface tension of 16 dynes/cm, following which the dipped test specimen was degassed with a vacuum dryer so that no bubbles remained in the specimen. Dry air was passed through the pretreated test specimen and the gas pressure was increased in stages, during which time the air flow rate was observed. This yielded a wet flow rate curve.
The minimum pore size and maximum pore size were determined from these two dry and wet flow rate curves.

<u>(1) Antimicrobial, Dustproof Fabric</u>

<u>Example 1</u>

Phosphoric acid groups were introduced onto cotton nonwoven fabric (average fiber diameter, 10 $\mu$m; thickness, 0.28 mm; basis weight, 60 $g/m^2$) in a dimethylformamide solution of urea and 85% phosphoric acid at 150°C, following which the resulting cotton nonwoven fabric was dipped in a saturated aqueous solution of calcium hydroxide. The nonwoven fabric was additionally dipped in an aqueous solution containing sodium, potassium, calcium, magnesium, chloride, carbonic acid, phosphoric acid and sulfuric acid ions, thereby inducing the deposition of hydroxyapatite onto the surface of the cotton nonwoven fabric so as to give a cotton nonwoven fabric having formed thereon a 25 $\mu$m thick hydroxyapatite film. Next, the cotton nonwoven fabric having formed thereon a hydroxyapatite film was immersed for 24 hours at room temperature in an aqueous solution containing 0.05 mol % silver nitrate, then removed and rinsed thoroughly with pure water and subsequently dried in a vacuum at 80°C, giving a microfiber cotton nonwoven fabric on which was supported 10 wt% of silver apatite (average fiber diameter, 10 $\mu$m; thickness, 0.3 mm; basis weight, 60 g/m$^2$).

In a separate procedure, a spinning dope was prepared by mixing 100 parts of a polylactic acid resin (LACEA H280, produced by Mitsui Chemicals, Inc.) and 570 parts of dimethylformamide at 60°C, causing the polylactic acid resin to dissolve in the dimethylformamide. The dope was placed in a syringe having a nozzle with a 0.4 mm ID orifice and electrostatic spinning was carried out at an applied voltage of 30 KV, room temperature, atmospheric pressure, and a distance of 15 cm to the fibrous substance-collecting aluminum electrode situated opposite the nozzle, thereby obtaining a nanofiber nonwoven fabric having a thickness of 0.06 mm. The resulting nanofiber nonwoven fabric had an average fiber diameter of 500 nm. Fibers having a diameter of more than 2 $\mu$m were not observed.

The silver apatite-supporting microfiber cotton nonwoven fabric and the polylactic acid nanofiber nonwoven fabric manufactured as described above were laminated together, thereby giving an antimicrobial, dustproof fabric.

Example 2

A dispersion composed of 10 parts of silver zeolite powder (Zeomic AJ-10N, an A-type zeolite produced by Sinanen Zeomic Co., Ltd.) dispersed in 100 parts of a polyurethane emulsion (NeoRezR-966; produced by DSM NeoResins) was sprayed as a mist onto a cotton nonwoven fabric (average fiber diameter, 10 $\mu$m; thickness, 0.28 mm; basis weight, 60 g/m$^2$), following which it was dried in a vacuum at 60°C, thereby giving a microfiber cotton nonwoven fabric (average fiber diameter, 10 $\mu$m; thickness, 0.3 mm; basis weight, 60 g/m$^2$) on which 10 wt% of silver zeolite was supported.

The resulting silver zeolite-supporting microfiber cotton nonwoven fabric was placed on a fibrous substance collecting electrode. Next, a spinning dope prepared by mixing together 100 parts of nylon 6.6 (Maranyl A125, produced by Unitika, Ltd.) and 570 parts of formic acid at room temperature so as to dissolve the nylon in the formic acid was placed in a syringe having a nozzle with a 0.4 mm ID orifice and electrostatic spinning was carried out at an applied voltage of 30 KV, room temperature, atmospheric pressure, and a distance of 15 cm to the fibrous substance-collecting electrode situated opposite the nozzle, thereby directly laminating a nylon nanofiber nonwoven fabric having a thickness of 0.04 mm onto the microfiber cotton nonwoven fabric so as to give an antimicrobial, dustproof fabric. The resulting nanofiber nonwoven fabric had an average fiber diameter of 300 nm. Fibers having a diameter of more than 1 $\mu$m were not observed.

Example 3

A cotton nonwoven fabric (average fiber diameter, 10 $\mu$m; thickness, 0.28 mm; basis weight, 60 g/m$^2$) was immersed in an aqueous solution containing aluminum, silicon and sodium so as to induce the deposition of zeolite crystals, thereby giving a cotton nonwoven fabric in which zeolite was supported at the interior of the fibers. This zeolite-supporting cotton nonwoven fabric was immersed in an aqueous solution of 0.1 mol % zinc chloride for 24 hours at room temperature, then removed, thoroughly rinsed with pure water, and dried in a vacuum at 80°C, thereby giving a microfiber cotton nonwoven fabric on which 10 wt% of zinc zeolite was supported (average fiber diameter, 10 $\mu$m; thickness, 0.3 mm; basis weight, 60 g/m$^2$).

This zinc zeolite-supporting microfiber cotton nonwoven fabric and a polylactic acid nanofiber nonwoven fabric (thickness, 0.04 mm) separately produced in the same way as in Example 1 above were laminated together, thereby giving an antimicrobial, dustproof fabric.

Example 4

A cotton nonwoven fabric (average fiber diameter, 10 $\mu$m; thickness, 0.28 mm; basis weight, 60 g/m$^2$) was immersed in a dispersion composed of 10 parts of finely divided activated carbon having an average particle size of 20 $\mu$m (Shirasagi, produced by Japan EnviroChemicals, Ltd.) in a 60% acrylic resin solution in water (Filex RC-104, produced by Meisei Chemical Works, Ltd.), then dried in a vacuum at 60°C, thereby giving a cotton nonwoven fabric containing fine particles of activated carbon. This activated carbon-containing cotton nonwoven fabric was immersed in a 0.1 mol % aqueous zinc chloride solution at 40°C for 10 hours, then air-dried for 1 hour, thereby giving a microfiber cotton nonwoven fabric which supports 10 wt% of zinc/activated carbon (average fiber diameter, 10 $\mu$m; thickness, 0.3 mm; basis weight, 60 g/m$^2$).

This zinc/activated carbon-supporting microfiber cotton nonwoven fabric was placed on a fibrous substance collecting electrode and electrostatic spinning was carried out by the same method as in Example 2 so as to directly laminate a 0.02 mm thick nylon nanofiber nonwoven fabric onto the microfiber cotton nonwoven fabric, thereby giving an antimicrobial, dustproof fabric.

Example 5

The zeolite-supporting cotton nonwoven fabric obtained in Example 3 was immersed in a 0.1 mol% aqueous copper sulfate solution at room temperature for 24 hours, then removed, thoroughly rinsed with pure water, and dried in a vacuum at 80°C, thereby giving a microfiber cotton nonwoven fabric (average fiber diameter, 10 $\mu$m; thickness, 0.3 mm; basis weight, 60 g/m$^2$) which supports 10 wt% of copper zeolite.

This copper zeolite-supporting microfiber cotton nonwoven fabric and a polylactic acid nanofiber nonwoven fabric of 0.02 mm thick produced separately in the same way as in Example 1 were laminated, giving an antimicrobial, dustproof fabric.

Example 6

The copper zeolite-supporting microfiber cotton nonwoven fabric obtained in Example 5 was placed on a fibrous substance-collecting electrode and electrostatic spinning was carried out in the same way as in Example 1, thereby directly laminating a 0.02 mm thick polylactic acid nanofiber nonwoven fabric onto the microfiber cotton nonwoven fabric so as to give an antimicrobial, dustproof fabric.

Example 7

The copper zeolite-supporting microfiber cotton nonwoven fabric obtained in Example 5 and a 0.02 mm thick nylon nanofiber nonwoven fabric which was separately produced by carrying out electrostatic spinning without placing a cotton nonwoven fabric on the fibrous substance-collecting electrode in Example 2 were laminated together to give an antimicrobial, dustproof fabric.

Example 8

The finely divided activated carbon-containing cotton nonwoven fabric obtained in Example 4 was immersed in a 0.1 mol % aqueous copper sulfate solution at room temperature for 24 hours, then air-dried for 1 hour, thereby giving a microfiber cotton nonwoven fabric (average fiber diameter, 10 $\mu$m; thickness, 0.3 mm; basis weight, 60 g/m$^2$) which supports 10 wt% of copper/activated carbon.

This copper/activated carbon-supporting microfiber cotton nonwoven fabric was placed on a fibrous substance-collecting electrode and electrostatic spinning was carried out in the same way as in Example 1, thereby directly laminating a 0.01 mm thick polylactic acid nanofiber nonwoven fabric onto a microfiber cotton nonwoven fabric so as to give an antimicrobial, dustproof fabric.

Example 9

Melt-blown nonwoven fabric (made of polypropylene; average fiber diameter, 10 $\mu$m; thickness, 0.13 mm; basis weight, 20 g/m$^2$) was laminated to each side of the antimicrobial, dustproof fabric obtained in Example 5, thereby giving an antimicrobial, dustproof fabric having a four-layer construction.

Example 10

Aside from using the antimicrobial, dustproof fabric obtained in Example 7, an antimicrobial, dustproof fabric having a four-layer construction was produced in the same way as in Example 9.

Comparative Example 1

A cotton nonwoven fabric (average fiber diameter, 10 $\mu$m; thickness, 0.28 mm; basis weight, 60 g/m$^2$) was used directly without modification.

Comparative Example 2

The silver-supporting apatite-containing microfiber cotton nonwoven fabric (average fiber diameter, 10 $\mu$m; thickness, 0.3 mm; basis weight, 60 g/m$^2$) obtained in Example 1 was used alone.

Comparative Example 3

Three layers of a cotton nonwoven fabric (average fiber diameter, 10 $\mu$m; thickness, 0.28 mm; basis weight, 60 g/m$^2$) were laminated and used.

Comparative Example 4

Aside from using a cotton nonwoven fabric (average fiber diameter, 10 $\mu$m; thickness, 0.28 mm; basis weight, 60 g/m$^2$) instead of the antimicrobial, dustproof fabric obtained in Example 5, a fabric having a three-layer construction was produced in the same way as in Example 9.

Comparative Example 5

Aside from using the copper-supporting activated carbon-containing microfiber cotton nonwoven fabric produced in Example 8 instead of the antimicrobial, dustproof fabric obtained in Example 5, a fabric having a three-layer construction was produced in the same way as in Example 9.

The antimicrobial, dustproof fabrics obtained in above Examples 1 to 10 of the invention and above Comparative Examples 1 to 5 were subjected to filtration tests, antimicrobial performance tests and water permeability tests. Results for the filtration tests and antimicrobial performance tests are shown in Table 1, and results for the water permeability tests are shown in Table 2.

The filtration tests in Examples 1 to 10 of the invention were carried out by passing test particle-bearing air through the antimicrobial, dustproof fabrics from the inorganic porous substance-containing microfiber nonwoven fabric side.

## Table 1

| | | Supported metal | Inorganic porous substance | Microfiber nonwoven fabric thickness (mm) | Nanofiber nonwoven fabric | | Filtration efficiency (%) | Antimicrobial performance |
|---|---|---|---|---|---|---|---|---|
| | | | | | Thickness (mm) | Material | | |
| Example | 1 | silver | apatite | 0.30 | 0.06 | PLA | 100 | good |
| | 2 | silver | zeolite | 0.30 | 0.04 | nylon 66 | 100 | good |
| | 3 | zinc | zeolite | 0.30 | 0.04 | PLA | 100 | good |
| | 4 | zinc | activated carbon | 0.30 | 0.02 | nylon 66 | 99 | good |
| | 5 | copper | zeolite | 0.30 | 0.02 | PLA | 99 | good |
| | 6 | copper | zeolite | 0.30 | 0.02 | PLA | 99 | good |
| | 7 | copper | zeolite | 0.30 | 0.02 | nylon 66 | 99 | good |
| | 8 | copper | activated carbon | 0.30 | 0.01 | PLA | 90 | good |
| | 9 | copper | zeolite | 0.56 | 0.02 | PLA | 99 | good |
| | 10 | copper | zeolite | 0.56 | 0.02 | nylon 66 | 99 | good |
| Comparative Example | 1 | -- | -- | 0.28 | -- | -- | 10 | NG |
| | 2 | silver | apatite | 0.30 | -- | -- | 12 | good |
| | 3 | -- | -- | 0.84 | -- | -- | 21 | NG |
| | 4 | -- | -- | 0.54 | -- | -- | 11 | NG |
| | 5 | copper | activated carbon | 0.56 | -- | -- | 13 | good |

Table 2

| | | Nanofiber nonwoven fabric minimum pore size/ maximum pore size (μm) | Water permeability (L/m$^2$·min) |
|---|---|---|---|
| Example | 1 | 0.03/0.3 | 0 |
| | 2 | 0.04/0.3 | 0 |
| | 3 | 0.05/0.4 | 0 |
| | 4 | 0.07/0.4 | 0 |
| | 5 | 0.08/0.5 | 0 |
| | 6 | 0.08/0.5 | 0 |
| | 7 | 0.1/0.8 | 0 |
| | 8 | 0.08/0.5 | 0 |
| | 9 | 0.08/0.5 | 0 |
| | 10 | 0.07/0.4 | 0 |
| Comparative Example | 1 | -- | 18.8 |
| | 2 | -- | 19.6 |
| | 3 | -- | 20.6 |
| | 4 | -- | 21.9 |
| | 5 | -- | 22.6 |

As is apparent from Tables 1 and 2, each of the antimicrobial, dustproof fabrics obtained in Examples 1 to 10 of the invention had an excellent test particle filtration efficiency and an excellent antimicrobial performance. In addition, the water permeability was low, resulting in an excellent water resistance.

(2) Mask

Production Example 1

A cotton nonwoven fabric (average fiber diameter, 10 μm; thickness, 0.28 mm; basis weight, 60 g/m$^2$) was dipped in an aqueous solution containing aluminum, silicon and sodium so as to induce the deposition of zeolite crystals, thereby giving a cotton nonwoven fabric on which zeolite was supported. This zeolite-supporting cotton nonwoven fabric was immersed in a 0.1 mol % aqueous copper sulfate solution for 24 hours at room temperature, following which it was removed, thoroughly rinsed with pure water, and dried in a vacuum at 80°C, thereby giving a microfiber cotton nonwoven fabric on which 10 wt% of copper zeolite was supported (average fiber diameter, 10 μm; thickness, 0.3 mm; basis weight, 60 g/m$^2$).

In a separate procedure, 100 parts of polylactic acid resin (LACEA H280, produced by Mitsui Chemicals, Inc.) and 570 parts of dimethylformamide were mixed at 60°C, causing the polylactic acid resin to dissolve in the dimethylformamide. The dope was placed in a syringe having a nozzle with a 0.4 mm ID orifice and electrostatic spinning was carried out at an applied voltage of 30 KV, room temperature, atmospheric pressure, and a distance of 15 cm to the fibrous substance-collecting aluminum electrode situated opposite the nozzle, thereby obtaining a nanofiber nonwoven fabric having a thickness of 0.02 mm. The resulting nanofiber nonwoven fabric had an average fiber diameter of 500 nm. Fibers having a diameter of more than 2 μm were not observed.

The copper zeolite-supporting microfiber cotton nonwoven fabric and the polylactic acid nanofiber nonwoven fabric manufactured as described above were laminated together, thereby giving a mask material.

Production Example 2

A spinning dope prepared by mixing 100 parts of nylon 6.6 (Maranyl A125, produced by Unitika, Ltd.) and 570 parts of formic acid at room temperature so as to dissolve the nylon in the formic acid was placed in a syringe having a nozzle with a 0.4 mm ID orifice and electrostatic spinning was carried out at an applied voltage of 30 KV, room temperature, atmospheric pressure, and a distance of 15 cm to the fibrous substance-collecting electrode situated opposite the nozzle, thereby giving a nylon nanofiber nonwoven fabric having a thickness of 0.02 mm. The nanofiber nonwoven fabric had an average fiber diameter of 300 nm. Fibers having a diameter of more than 1 $\mu$m were not observed.

The copper zeolite-supporting microfiber cotton nonwoven fabric obtained in Production Example 1 was laminated together with the foregoing nylon nanofiber nonwoven fabric, thereby giving a mask material.

Production Example 3

Aside from using an aqueous solution containing 0.1 mol% of silver nitrate instead of an aqueous solution containing 0.1 mol% of copper sulfate, a microfiber cotton nonwoven fabric (average fiber diameter, 10 $\mu$m; thickness, 0.3 mm; basis weight, 60 g/m$^2$) having 10 wt% of silver zeolite supported thereon was obtained. This silver zeolite-supporting microfiber cotton nonwoven fabric and the polylactic acid resin nanofiber nonwoven fabric of Production Example 1 were laminated together, thereby giving a mask material.

Example 11

A melt-blown nonwoven fabric (material, polypropylene; average fiber diameter, 10 $\mu$m; thickness, 0.13 mm; basis weight, 20 g/m$^2$) was laminated onto the polylactic acid nanofiber nonwoven fabric side of the mask material obtained in Production Example 1 so as to produce a facepiece having a three-layer construction and dimensions of 15 cm x 10 cm. A pair of elastic ear loops was attached to the short edges of the facepiece, thereby giving a mask.

Example 12

A wet-laid nonwoven fabric (material, cotton; average fiber diameter, 15 $\mu$m; thickness, 0.25 mm; basis weight, 45 g/m$^2$) was laminated onto the polylactic acid nanofiber nonwoven fabric side of the mask material obtained in Production Example 1 so as to produce a facepiece having a three-layer construction and dimensions of 15 cm x 10 cm. A pair of elastic ear loops was attached to the short edges of the facepiece, thereby giving a mask.

Example 13

A melt-blown nonwoven fabric (material, polypropylene; average fiber diameter, 10 $\mu$m; thickness, 0.13 mm; basis weight, 20 g/m$^2$) was laminated onto both sides of the mask material obtained in Production Example 1 so as to produce a facepiece having a four-layer construction and dimensions of 15 cm x 10 cm. A pair of elastic ear loops was attached to the short edges of the facepiece, thereby giving a mask.

Example 14

A melt-blown nonwoven fabric (material, polypropylene; average fiber diameter, 10 $\mu$m; thickness, 0.13 mm; basis weight, 20 g/m$^2$) was laminated onto the copper zeolite-supporting microfiber cotton nonwoven fabric side of the mask material obtained in Production Example 1 and a wet-laid nonwoven fabric (material, cotton; average fiber diameter, 15 $\mu$m; thickness, 0.25 mm; basis weight, 45 g/m$^2$) was laminated onto the polylactic acid nanofiber nonwoven fabric side of the same mask material so as to produce a facepiece having a four-layer construction and dimensions of 15 cm x 10 cm. A pair of elastic ear loops was attached to the short edges of the facepiece, thereby giving a mask.

Example 15

Aside from using the mask material obtained in Example 2, a facepiece having a four-layer construction and dimensions of 15 cm x 10 cm was produced in the same way as in Example 13. A pair of elastic ear loops was attached to the both short edges of the facepiece, thereby giving a mask.

Example 16

Aside from using the mask material obtained in Example 2, a facepiece having a four-layer construction and dimensions of 15 cm x 10 cm was produced in the same way as in Example 14. A pair of elastic ear loops was attached to both short edges of the facepiece, thereby giving a mask.

Example 17

Aside from using the mask material obtained in Example 3, a facepiece having a three-layer construction and dimensions of 15 cm x 10 cm was produced in the same way as in Example 12. A pair of elastic ear loops was attached to both short edges of the facepiece, thereby giving a mask.

Comparative Example 6

Aside from directly using a cotton nonwoven fabric (average fiber diameter, 10 $\mu$m; thickness, 0.28 mm; basis weight, 60 g/m$^2$) without modification as the facepiece, a mask was obtained in the same way as in Example 11.

Comparative Example 7

Phosphoric acid groups were introduced onto a cotton nonwoven fabric (average fiber diameter, 10 $\mu$m; thickness, 0.28 mm; basis weight, 60 g/m$^2$) in a dimethylformamide solution of urea and 85% phosphoric acid at 150°C, following which the resulting cotton nonwoven fabric was dipped in a saturated aqueous solution of calcium hydroxide. The nonwoven fabric was additionally dipped in an aqueous solution containing sodium, potassium, calcium, magnesium, chloride, carbonic acid, phosphoric acid and sulfuric acid ions, thereby inducing the deposition of hydroxyapatite on the surface of the cotton nonwoven fabric so as to give a cotton nonwoven fabric having formed thereon a 25 $\mu$m thick hydroxyapatite film. Next, the cotton nonwoven fabric on which had been formed a hydroxyapatite film was immersed for 24 hours at room temperature in a 0.05 mol % aqueous silver nitrate solution, then removed and rinsed thoroughly with pure water and subsequently dried in a vacuum at 80°C, giving a microfiber cotton nonwoven fabric on which was supported 10 wt% of silver apatite (average fiber diameter, 10 $\mu$m; thickness, 0.3 mm; basis weight, 60 g/m$^2$).
Aside from using the silver-supporting apatite-containing microfiber cotton nonwoven fabric (average fiber diameter, 10 $\mu$m; thickness, 0.3 mm; basis weight, 60 g/m$^2$) alone as the facepiece, a mask was obtained in the same way as in Example 11.

Comparative Example 8

Aside from stacking together 3 sheets of cotton nonwoven fabric (average fiber diameter, 10 $\mu$m; thickness, 0.28 mm; basis weight, 60 g/m$^2$) to form the facepiece, a mask was obtained in the same way as in Example 11.

Comparative Example 9

Aside from using a cotton nonwoven fabric (average fiber diameter, 10 $\mu$m; thickness, 0.28 mm; basis weight, 60 g/m$^2$) instead of the mask material obtained in Production Example 1, a facepiece was produced in the same way as in Example 13, thereby giving a mask.

Comparative Example 10

Aside from using a cotton nonwoven fabric (average fiber diameter, 10 $\mu$m; thickness, 0.28 mm; basis weight, 60 g/m$^2$) instead of the mask material obtained in Production Example 1, a facepiece was produced in the same way as in Example 14, thereby giving a mask.

Comparative Example 11

A cotton nonwoven fabric (average fiber diameter, 10 $\mu$m; thickness, 0.28 mm; basis weight, 60 g/m$^2$) was immersed in a dispersion composed of 10 parts of finely divided activated carbon having an average particle size of 20 $\mu$m (Shirasagi, produced by Japan EnviroChemicals, Ltd.) in a 60% acrylic resin solution in water (Filex RC-104, produced by Meisei Chemical Works, Ltd.), then dried in a vacuum at 60°C, thereby giving a cotton nonwoven fabric containing fine particles of activated carbon. This activated carbon-containing cotton nonwoven fabric was immersed in a 0.1 mol % aqueous copper sulfate solution at room temperature for 24 hours, then air-dried for 1 hour, thereby giving a microfiber cotton nonwoven fabric which supports 10 wt% of copper-activated carbon (average fiber diameter, 10 $\mu$m; thickness, 0.3 mm; basis weight, 60 g/m$^2$).
Aside from using the copper-supporting activated · carbon-containing microfiber cotton nonwoven fabric prepared above instead of the mask material obtained in Production Example 1, a facepiece was produced in the same way as in Example 13, thereby giving a mask.

Comparative Example 12

Aside from using the copper-supporting activated carbon-containing microfiber cotton nonwoven fabric of Comparative Example 11, a facepiece was produced in the same way as in Example 14, thereby giving a mask.

The masks obtained in above Examples 11 to 17 of the invention and above Comparative Examples 6 to 12 were subjected to filtration tests, antimicrobial performance tests and water permeability tests. Results for the filtration tests and antimicrobial performance tests are shown in Table 3, and results for the water permeability tests are shown in Table 4.

The filtration tests in Examples 11 to 17 of the invention were carried out by passing test particle-bearing air through the masks from the inorganic porous substance-containing microfiber nonwoven fabric side.

### Table 3

| | | Supported metal | Inorganic porous substance | Microfiber nonwoven fabric thickness (mm) | Nanofiber nonwoven fabric | | Filtration efficiency (%) | Antimicrobial performance |
|---|---|---|---|---|---|---|---|---|
| | | | | | Thickness (mm) | Material | | |
| Example | 11 | copper | zeolite | 0.43 | 0.02 | PLA | 99 | good |
| | 12 | copper | zeolite | 0.55 | 0.02 | PLA | 99 | good |
| | 13 | copper | zeolite | 0.56 | 0.02 | PLA | 99 | good |
| | 14 | copper | zeolite | 0.68 | 0.02 | PLA | 99 | good |
| | 15 | copper | zeolite | 0.56 | 0.02 | nylon 66 | 99 | good |
| | 16 | copper | zeolite | 0.68 | 0.02 | nylon 66 | 99 | good |
| | 17 | silver | zeolite | 0.43 | 0.02 | PLA | 99 | good |
| Comparative Example | 6 | -- | -- | 0.28 | -- | -- | 10 | NG |
| | 7 | silver | apatite | 0.30 | -- | -- | 12 | good |
| | 8 | -- | -- | 0.84 | -- | -- | 21 | NG |
| | 9 | -- | -- | 0.54 | -- | -- | 11 | NG |
| | 10 | -- | -- | 0.66 | -- | -- | 21 | NG |
| | 11 | copper | activated carbon | 0.56 | -- | -- | 11 | good |
| | 12 | copper | activated carbon | 0.68 | -- | -- | 17 | good |

Table 4

|  |  | Nanofiber nonwoven fabric minimum pore size/ maximum pore size (μm) | Water permeability (L/m²·min) |
|---|---|---|---|
| Example | 11 | 0.08/0.5 | 0 |
|  | 12 | 0.08/0.5 | 0 |
|  | 13 | 0.08/0.5 | 0 |
|  | 14 | 0.08/0.5 | 0 |
|  | 15 | 0.07/0.4 | 0 |
|  | 16 | 0.07/0.4 | 0 |
|  | 17 | 0.08/0.5 | 0 |
| Comparative Example | 6 | -- | 18.8 |
|  | 7 | -- | 19.6 |
|  | 8 | -- | 20.6 |
|  | 9 | -- | 21.9 |
|  | 10 | -- | 19.8 |
|  | 11 | -- | 22.0 |
|  | 12 | -- | 22.6 |

As is apparent from Tables 3 and 4, each of the masks obtained in Examples 11 to 17 of the invention had an excellent test particle filtration efficiency and an excellent antimicrobial performance. In addition, the water permeability was low, resulting in an excellent water resistance.

**Claims**

1.  A fabric comprising:

   a textile material layer which is composed of microfibers with an average fiber diameter of from 1 to 100 μm and contains an inorganic porous substance, and
   a nanofiber nonwoven fabric layer which is laminated onto the textile material layer and has an average fiber diameter of at least 1 nm but less than 1,000 nm.

2.  The fabric of claim 1, wherein said nanofiber nonwoven fabric includes nanofibers made of polylactic acid and/or polyamide.

3.  The fabric of claim 1 or 2, wherein said nanofiber nonwoven fabric has a thickness of at least 1 μm.

4.  The fabric of any one of claims 1 to 3, wherein the nanofiber nonwoven fabric has a minimum pore size of 0.1 μm or less and a maximum pore size of more than 0.1 μm but not more than 1 μm.

5.  The fabric of any one of claims 1 to 4, wherein said inorganic porous substance is one or more selected from the group consisting of zeolite, hydrotalcite, hydroxyapatite, activated carbon, diatomaceous earth, silica gel and clay minerals.

6.  The fabric of any one of claims 1 to 5, wherein said inorganic porous substance supports one or more metals selected from the group consisting of copper, silver, zinc, iron, lead, nickel, cobalt, palladium and platinum.

7.  The fabric of claim 6, wherein said inorganic porous substance is a zeolite which supports one or more metals selected from among copper, silver and zinc.

8. The fabric of any one of claims 1 to 7, wherein said nanofiber nonwoven fabric layer is formed directly on said textile material layer by electrostatic spinning.

9. A mask comprising:

   a facepiece for covering a wearer's nose and mouth, and
   a securing member, disposed on the facepiece, for securing the mask to the wearer,

   wherein the facepiece comprises the antimicrobial, dustproof fabric of any one of claims 1 to 8.

10. The mask of claim 9, wherein the textile material layer composed of microfibers in the antimicrobial, dustproof fabric of the facepiece is a microfiber nonwoven or woven fabric layer.

11. The mask of claim 10, wherein said nanofiber nonwoven fabric is disposed on a nose and mouth side of the facepiece and said microfiber nonwoven or woven fabric is disposed on a side of the facepiece opposite the nose and mouth side.

12. The mask of claim 10, wherein the facepiece has a three-layer construction comprising:

   the nanofiber nonwoven fabric layer,
   the microfiber nonwoven or woven fabric layer which is laminated on a first side of the nanofiber nonwoven fabric layer, and
   an inorganic porous substance-lacking microfiber nonwoven or woven fabric layer which is laminated on a second side of the nanofiber nonwoven fabric layer.

13. The mask of claim 10, wherein the facepiece has a three-layer construction comprising:

   the nanofiber nonwoven fabric layer, and
   a layer of the microfiber nonwoven or woven fabric laminated on each of two sides of the nanofiber nonwoven fabric layer.

14. The mask of claim 10, wherein the facepiece includes a pair of laminated bodies, each of which comprises said microfiber nonwoven or woven fabric layer and said nanofiber nonwoven fabric layer laminated thereon.

15. The mask of claim 14, wherein the pair of laminated bodies are laminated together so that the respective nanofiber nonwoven fabric layers are both on the inside.

European Patent
Office

**EUROPEAN SEARCH REPORT**

Application Number

EP 08 25 0350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/034659 A (UNIV TENNESSEE RES FOUNDATION [US]; WADSWORTH LARRY C [US]; TSAI PETER) 21 April 2005 (2005-04-21) * claims 9,10,11,22-28 * * figures 3-4b,6,7; examples f,m,n * ----- | 1,5,8-10 | INV. D04H13/00 B32B5/26 A41D13/11 B01D39/16 B01D39/20 A41D31/00 |
| X | WO 03/013732 A (SANDLER HELMUT HELSA WERKE [DE]; CZADO WOLFGANG [DE]) 20 February 2003 (2003-02-20) * page 2, line 30 - page 3, line 2 * * page 5, lines 14-20 * * examples 1-4 * ----- | 1,2,5,8 | |
| A | WO 2006/049664 A (KIMBERLY CLARK CO [US]; CHEN FUNG-JOU [US]; HUANG LEI [US]; LINDSAY JE) 11 May 2006 (2006-05-11) * figures 8-14 * * paragraphs [0036], [0042] * * paragraphs [0099], [0121] - [0125] * * examples 1,2 * * paragraph [0133] * * figures 2c,2d,2e,2f * ----- | 1-15 | |
| A | US 6 153 266 A (YOKOGAWA YOSHIYUKI [JP] ET AL) 28 November 2000 (2000-11-28) * column 1, lines 5-18 * ----- | 1,5,9 | TECHNICAL FIELDS SEARCHED (IPC) D04H A41D B01D B32B A61F D06M |
| A | WO 03/080911 A (CC TECHNOLOGY INVEST CO LTD [CN]; YAN JIXIONG [CN]; SOH KAR LIANG [SG]) 2 October 2003 (2003-10-02) * claim 20 * ----- | 1,9 | |
| A | US 2006/137318 A1 (LIM HYUN S [US] ET AL) 29 June 2006 (2006-06-29) * paragraph [0017] * * example 5 * * claims 1-10 * ----- | 1 | |
| | -/-- | | |

The present search report has been drawn up for all claims

| Place of search | Date of completion of the search | Examiner |
|---|---|---|
| The Hague | 29 April 2008 | Barathe, Rainier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 1 953 286 A1**

**European Patent Office**

# EUROPEAN SEARCH REPORT

**Application Number**

EP 08 25 0350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | WO 03/064006 A (KOSLOW TECHN CORP [US]) 7 August 2003 (2003-08-07) * page 13, lines 9-22 * * claims 1,4,7 * | 1-15 | |
| A | JP 2006 289209 A (TEIJIN TECHNO PRODUCTS LTD) 26 October 2006 (2006-10-26) * abstract * * paragraphs [0001], [0009] * | 1-15 | |
| A | GB 2 404 347 A (FLEETGUARD INC [US]) 2 February 2005 (2005-02-02) * page 5, lines 5-7, paragraph 32; figure 3 * * paragraph [0025] * * paragraphs [0037], [0040], [0041], [0050] * * claims 1,13,22,34,41,49 * | 1-9 | |
| A | US 6 034 010 A (CARTWRIGHT WILLIAM FRANCIS [US] ET AL) 7 March 2000 (2000-03-07) * claims 1,11,17,28 * | 1,9 | TECHNICAL FIELDS SEARCHED (IPC) |

The present search report has been drawn up for all claims

| Place of search | Date of completion of the search | Examiner |
|---|---|---|
| The Hague | 29 April 2008 | Barathe, Rainier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 25 0350

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2008

| Patent document cited in search report | | Publication date | Patent family member(s) | | Publication date |
|---|---|---|---|---|---|
| WO 2005034659 | A | 21-04-2005 | NONE | | |
| WO 03013732 | A | 20-02-2003 | DE | 10137161 A1 | 20-02-2003 |
| | | | EP | 1412090 A1 | 28-04-2004 |
| WO 2006049664 | A | 11-05-2006 | EP | 1834019 A1 | 19-09-2007 |
| | | | KR | 20070073851 A | 10-07-2007 |
| US 6153266 | A | 28-11-2000 | JP | 3896437 B2 | 22-03-2007 |
| | | | JP | 11171516 A | 29-06-1999 |
| WO 03080911 | A | 02-10-2003 | AT | 325919 T | 15-06-2006 |
| | | | AU | 2003219636 A1 | 08-10-2003 |
| | | | CN | 1643206 A | 20-07-2005 |
| | | | DE | 60305172 T2 | 10-05-2007 |
| | | | EP | 1490543 A2 | 29-12-2004 |
| | | | TW | 244522 B | 01-12-2005 |
| | | | US | 2003190851 A1 | 09-10-2003 |
| US 2006137318 | A1 | 29-06-2006 | NONE | | |
| WO 03064006 | A | 07-08-2003 | AU | 2003210565 B2 | 13-03-2008 |
| | | | CA | 2474854 A1 | 07-08-2003 |
| | | | CN | 1625429 A | 08-06-2005 |
| | | | EP | 1483034 A1 | 08-12-2004 |
| | | | JP | 2005527344 T | 15-09-2005 |
| | | | US | 2003177909 A1 | 25-09-2003 |
| JP 2006289209 | A | 26-10-2006 | NONE | | |
| GB 2404347 | A | 02-02-2005 | DE | 102004036440 A1 | 17-02-2005 |
| | | | US | 2007021021 A1 | 25-01-2007 |
| | | | US | 2005026526 A1 | 03-02-2005 |
| US 6034010 | A | 07-03-2000 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003166155 A
- JP 2005270965 A
- JP 2005527344 A

- JP 2005124777 A
- JP 2005007072 A
- JP Y3068551 B